# EUROPEAN PATENT APPLICATION

(11) **EP 4 311 189 A1**
(43) Date of publication of application: **24.01.2024**
(21) Application number: 21933561.9
(22) Date of filing: 29.03.2021
(51) Int. Cl.: H04L 43/00

(54) **MEASUREMENT METHOD AND NETWORK DEVICE**

(71) Applicant: Huawei Technologies Co., Ltd., Shenzhen, Guangdong 518129 (CN)
(72) Inventor: GAO, Cen, Shenzhen, Guangdong 518129 (CN); XU, Xinda, Shenzhen, Guangdong 518129 (CN); PENG, Yunliang, Shenzhen, Guangdong 518129 (CN)
(74) Representative: Maiwald GmbH
(86) International application number: PCT/CN2021/083612
(87) International publication number: WO 2022/204875

(57) **Abstract**

Embodiments of this application provide a measurement method and a network device. The method includes: obtaining processing duration of each processing module of at least one processing module in a process of processing a to-be-measured packet; and obtaining, based on the processing duration of each processing module, total duration of processing the packet by the at least one processing module. In embodiments of this application, in a process of processing a packet, a packet forwarding delay of an electronic device or a single chip can be obtained. Therefore, in an end-to-end delay measurement scenario, a forwarding delay of an electronic device at each hop can be obtained, so that a faulty electronic device in a packet forwarding process is accurately positioned.

## Description

### TECHNICAL FIELD

Embodiments of this application relate to the communication field, and in particular, to a measurement method and a network device.

### BACKGROUND

Currently, for a network processor data forwarding chip, a forwarding delay is a quite important indicator for measuring a chip capability, and the forwarding delay has great impact on service performance.

In the conventional technology, end-to-end measurement is usually used for measuring a delay of a forwarding path. For example, a round-trip delay between a device at one end and a device at another end may be measured, or a one-way delay from a device at one end to a device at another end may be measured. However, when a plurality of hops of devices exist on the forwarding path, an end-to-end measurement manner cannot accurately position a faulty device.

### SUMMARY

To resolve the foregoing technical problem, this application provides a measurement method and a network device. In the method, an electronic device or a chip may obtain total duration of packet processing, to obtain a forwarding delay of an electronic device at each hop on an end-to-end forwarding path, and therefore, a faulty device can be accurately positioned.

According to a first aspect, an embodiment of this application provides a measurement method. The method includes the following steps: An apparatus receives a first measurement packet. The apparatus obtains processing duration of processing the first measurement packet by each processing module of at least one processing module. The apparatus obtains, based on the processing duration of processing the first measurement packet by each processing module, total processing duration of processing the first measurement packet by the at least one processing module. In this way, in this embodiment of this application, delay statistics collection is performed on a single processing module in each electronic device on a forwarding path, so that a processing delay of each device can be obtained, and a faulty device and a faulty module on a transmission path can be accurately positioned.

For example, the electronic device may include a plurality of modules, and the at least one processing module is a part or all of the plurality of modules.

For example, the total processing duration is a sum of processing duration of all processing modules.

According to the first aspect, the first measurement packet includes indication information, and the indication information indicates that the processing duration of the first measurement packet needs to be measured. In this way, a test packet can be generated by adding the indication information.

For example, the test packet may be an independent packet, or may be a data packet.

For example, the indication information may be in a frame header part of the packet.

According to the first aspect or any one of the foregoing implementations of the first aspect, the receiving a first measurement packet includes: The apparatus generates an indication signal in response to the received first measurement packet, where the indication signal indicates the at least one processing module to send a trigger signal when starting to process the first measurement packet. In this way, after it is identified that the current packet carries the indication information, the indication signal can be generated to trigger the processing module in a chip to perform delay measurement.

For example, in this embodiment of this application, a first in first out test manner is used, to be specific, each processing module sends the trigger signal when starting to perform processing. In other words, when each processing module starts to perform processing, a delay test is started.

According to the first aspect or any one of the foregoing implementations of the first aspect, the receiving a first measurement packet includes: identifying, in response to the received first measurement packet, whether the first measurement packet includes specified characteristic information; and generating an indication signal when it is identified that the first measurement packet includes the specified characteristic information, where the indication signal indicates the at least one processing module to send a trigger signal when starting to process the first measurement packet. In this way, this embodiment of this application further provides another delay measurement triggering manner. The apparatus may determine, by identifying the specified characteristic information in the packet, that the delay test needs to be performed for the packet.

According to the first aspect or any one of the foregoing implementations of the first aspect, the obtaining processing duration of processing the first measurement packet by each processing module of the at least one processing module includes: recording, in response to the received trigger signal sent by each processing module, start time at which each processing module processes for the first measurement packet. In this way, the start time of each module is recorded, so that the processing duration of each module can be obtained.

According to the first aspect or any one of the foregoing implementations of the first aspect, the processing modules are connected in series, and the processing duration of each processing module is a difference between start time of two processing modules connected in series.

For example, for parallel processing modules, statistics collection may merely be performed on a module with longest processing duration, which is used as processing duration of two parallel modules.

According to the first aspect or any one of the foregoing implementations of the first aspect, the obtaining processing duration of processing the first measurement packet by each processing module of at least one processing module includes: transmitting, after a previous processing module in the two processing modules connected in series completes processing the first measurement packet, a processed first measurement packet and the indication signal to a next processing module. In this way, each processing module is continuously triggered to measure a processing delay in a relay manner.

According to the first aspect or any one of the foregoing implementations of the first aspect, the specified characteristic information is at least one of the following: destination MAC address information, source MAC address information, destination IP address information, source IP address information, and label information. In this way, the chip can perform packet matching by identifying the specified characteristic information, for example, any one of the foregoing addresses. When the matching is successful, delay measurement can be performed for a packet.

According to a second aspect, an embodiment of this application provides a network device. The network device includes: a receiving module, configured to receive a first measurement packet; and an obtaining module, configured to obtain processing duration of processing the first measurement packet by each processing module of at least one processing module. The obtaining module is further configured to obtain, based on the processing duration of processing the first measurement packet by each processing module, total processing duration of processing the first measurement packet by the at least one processing module.

According to the second aspect, the first measurement packet includes indication information, and the indication information indicates that the processing duration of the first measurement packet needs to be measured.

According to the second aspect or any one of the foregoing implementations of the second aspect, the receiving module is configured to: generate an indication signal in response to the received first measurement packet, where the indication signal indicates the at least one processing module to send a trigger signal when starting to process the first measurement packet.

According to the second aspect or any one of the foregoing implementations of the second aspect, the receiving module is configured to: identify, in response to the received first measurement packet, whether the first measurement packet includes specified characteristic information; and generate an indication signal when it is identified that the first measurement packet includes the specified characteristic information, where the indication signal indicates the at least one processing module to send a trigger signal when starting to process the first measurement packet.

According to the second aspect or any one of the foregoing implementations of the second aspect, the obtaining module is configured to: record, in response to the received trigger signal sent by each processing module, start time at which each processing module processes the first measurement packet.

According to the second aspect or any one of the foregoing implementations of the second aspect, the processing modules are connected in series, and the processing duration of each processing module is a difference between start time of two processing modules connected in series.

According to the second aspect or any one of the foregoing implementations of the second aspect, after a previous processing module in the two processing modules connected in series completes processing the first measurement packet, a processed first measurement packet and the indication signal are transmitted to a next processing module.

According to the second aspect or any one of the foregoing implementations of the second aspect, the specified characteristic information is at least one of the following: destination MAC address information, source MAC address information, destination IP address information, source IP address information, and label information.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides a computer-readable medium, configured to store a computer program, where the computer program includes instructions for performing the method according to the first aspect or any possible implementation of the first aspect.

The third aspect and any one of the implementations of the third aspect respectively correspond to the first aspect and any one of the implementations of the first aspect. For technical effects corresponding to the third aspect and any one of the implementations of the third aspect, refer to technical effects corresponding to the first aspect and any one of the implementations of the first aspect. Details are not described herein again.

According to a fourth aspect, an embodiment of this application provides a computer program, where the computer program includes instructions for performing the method according to the first aspect or any possible implementation of the first aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to technical effects corresponding to the first aspect and any one of the implementations of the first aspect. Details are not described herein again.

According to a fifth aspect, an embodiment of this application provides a chip, where the chip includes a processing circuit and a transceiver pin. The transceiver pin and the processing circuit communicate with each other through an internal connection path. The processing circuit performs the method according to the first aspect or any one of the possible implementations of the first aspect, to control a receiving pin to receive a signal and a sending pin to send a signal.

The fifth aspect and any one of the implementations of the fifth aspect respectively correspond to the first aspect and any one of the implementations of the first aspect. For technical effects corresponding to the fifth aspect and any one of the implementations of the fifth aspect, refer to technical effects corresponding to the first aspect and any one of the implementations of the first aspect. Details are not described herein again.

According to the fifth aspect, this embodiment of this application provides a network device. The network device may be configured to send a first packet to a destination device through a data link, where the data link includes at least one intermediate device. The network device is further configured to receive first processing delay information sent by each intermediate device of the at least one intermediate device, where the first processing delay information indicates processing duration of processing the first packet by at least one processing module of the intermediate device; and receive second processing delay information sent by the destination device, where the second processing delay information indicates processing duration of processing the first packet by at least one processing module of the destination device. The network device is further configured to determine, based on the first processing delay information and the second processing delay information, whether a faulty processing module exists in the at least one intermediate device and the destination device. In this way, the network device can position a faulty module based on the processing duration that corresponds to each processing module and that is fed back by each device, so that a forwarding fault on a link is accurately positioned, and a faulty device and a faulty module can be quickly positioned.

### BRIEF DESCRIPTION OF DRAWINGS

FIG. 1 is a schematic diagram of an example of a communication system;
FIG. 2 is a schematic diagram of a structure of an example of a device;
FIG. 3a is a schematic diagram of a structure of an example of a chip;
FIG. 3b is a schematic diagram of an example of a measurement procedure;
FIG. 4 is a schematic diagram of a structure of an example of a chip;
FIG. 5 is a schematic diagram of a structure of an example of a chip;
FIG. 6 is a schematic diagram of a structure of a communication apparatus according to an embodiment of this application; and
FIG. 7 is a schematic diagram of a structure of a chip according to an embodiment of this application.

### DESCRIPTION OF EMBODIMENTS

With reference to accompanying drawings in embodiments of this application, the following clearly and completely describes technical solutions in embodiments of this application. It is clear that the described embodiments are a part but not all of embodiments of this application. All other embodiments obtained by a person of ordinary skill in the art based on embodiments of this application without creative efforts shall fall within the protection scope of this application.

A term "and/or" in this specification describes only an association relationship for describing associated objects and represents that three relationships may exist. For example, A and/or B may represent three cases: Only A exists, both A and B exist, and only B exists.

In the specification and claims of embodiments of this application, terms such as "first" and "second" are used for distinguishing between different objects but are not used for describing a specific order of the objects. For example, a first target object, a second target object, and the like are used for distinguishing between different target objects, but are not used for describing a specific order of the target objects.

In embodiments of this application, terms such as "example" or "for example" is used for representing giving an example, an illustration, or a description. In embodiments of this application, any embodiment or design solution described as the "example" or "for example" should not be explained as being more preferred or having more advantages than other embodiments or design solutions. Exactly, usage of the terms "example", "for example", or the like is intended to present a related concept in a specific manner.

In the descriptions of embodiments of this application, unless otherwise described, "a plurality of" refers to two or more than two. For example, a plurality of processing units mean two or more processing units. A plurality of systems mean two or more systems.

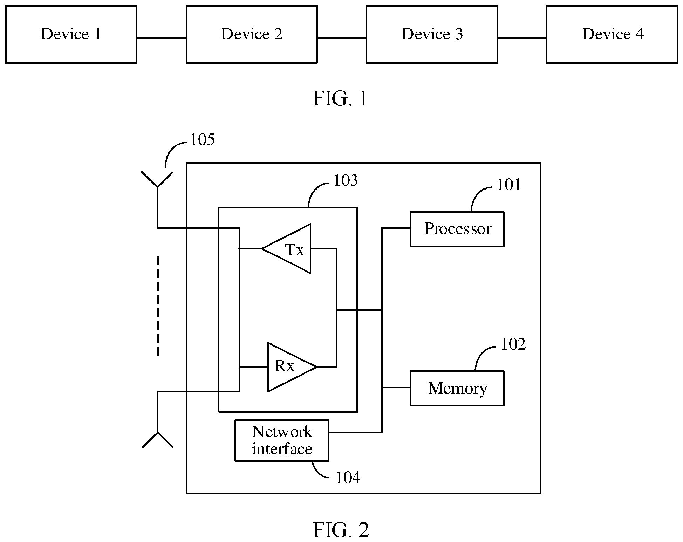

Before the technical solutions in embodiments of this application are described, a communication system in embodiments of this application is first described with reference to the accompanying drawings. FIG. 1 is a schematic diagram of a communication system according to an embodiment of this application. The communication system includes a device 1, a device 2, a device 3, and a device 4. The device 1 is communicatively connected to the device 2, the device 2 is communicatively connected to the device 3, and the device 3 is communicatively connected to the device 4. Any two devices of the device 1 to the device 4 can communicate with each other. In a specific implementation process of this embodiment of this application, the device in the device 1 to the device 4 may be a device such as a computer, a smartphone, or a server. For example, a communication connection between the device 1 to the device 4 may be wired or wireless. A connection relationship and a quantity of devices that are shown in FIG. 1 in this embodiment of this application are merely examples. This is not limited in this application.

FIG. 2 is a schematic diagram of a structure of a device. In FIG. 2:

The device includes at least one processor 101, at least one memory 102, at least one transceiver 103, at least one network interface 104, and one or more antennas 105. The processor 101, the memory 102, the transceiver 103, and the network interface 104 are connected, for example, through a bus. The antenna 105 is connected to the transceiver 103. The network interface 104 is configured to enable the device to connect to another communication device through a communication link. In this embodiment of this application, the connection may include various types of interfaces, transmission lines, buses, or the like. This is not limited in this embodiment. It should be understood that the device 100 shown in FIG. 2 is merely an example, and the device 100 may have more or fewer components than those shown in the figure, may combine two or more components, or may have different component configurations. The device shown in FIG. 2 may be any one of the device 1 to the device 4 in FIG. 1.

A processor, for example, the processor 101 in this embodiment of this application may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 101 may be a single-core (single-CPU) processor or a multi-core (multi-CPU) processor. The at least one processor 101 may be integrated into one chip or located on a plurality of different chips.

A memory, for example, the memory 102 in this embodiment of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable read-only memory, EEPROM) In some scenarios, the memory may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory is not limited thereto.

The memory 102 may exist independently, and is connected to the processor 101. Optionally, the memory 102 and the processor 101 may alternatively be integrated, for example, integrated into one chip. The memory 102 can store program code for performing the technical solutions in embodiments of this application, and the processor 101 controls execution of the program code. Various types of computer program code to be executed may also be considered as drivers of the processor 101. For example, the processor 101 is configured to execute the computer program code stored in the memory 102, to implement the technical solutions in embodiments of this application. Optionally, the memory 102 may be located outside a chip, and is connected to the processor 101 through an interface.

The transceiver 103 may be configured to support receiving or sending of a radio frequency signal between the device and another device. The transceiver 103 may be connected to the antenna 105. The transceiver 103 includes a transmitter Tx and a receiver Rx. Specifically, the one or more antennas 105 may receive a radio frequency signal. The receiver Rx of the transceiver 103 is configured to receive the radio frequency signal from an antenna, convert the radio frequency signal into a digital baseband signal or a digital intermediate frequency signal, and provide the digital baseband signal or the digital intermediate frequency signal for the processor 101, so that the processor 101 performs further processing, for example, performs demodulating processing and decoding processing on the digital baseband signal or the digital intermediate frequency signal. In addition, the transmitter Tx of the transceiver 103 is further configured to receive a modulated digital baseband signal or a modulated digital intermediate frequency signal from the processor 101, convert the modulated digital baseband signal or the modulated digital intermediate frequency signal into a radio frequency signal, and send the radio frequency signal through the one or more antennas 105. Specifically, the receiver Rx may selectively perform one-level or multiple-level down-mixing processing and analog-to-digital conversion processing on the radio frequency signal, to obtain the digital baseband signal or the digital intermediate frequency signal. A sequence of the down-mixing processing and the analog-to-digital conversion processing is adjustable. The transmitter Tx may selectively perform one-level or multiple-level up-mixing processing and digital-to-analog conversion processing on the modulated digital baseband signal or the modulated digital intermediate frequency signal to obtain the radio frequency signal. A sequence of the up-mixing processing and the digital-to-analog conversion processing is adjustable. The digital baseband signal and the digital intermediate frequency signal may be collectively referred to as digital signals.

With reference to the foregoing schematic diagram of the communication system shown in FIG. 1, the following describes specific implementation solutions of this application.

For example, when a delay of the communication system in FIG. 1 is tested, any one of the device 1 to the device 4 may initiate a delay test procedure. For example, in this embodiment of this application, an example in which the device 1 initiates a delay test is used for description.

For example, in a process in which the device 1 and the device 4 perform data interaction, the device 2 and the device 3 are used as intermediate devices between the device 1 and the device 4, and may be configured to forward data of the device 1 to the device 4, or forward data of the device 4 to the device 1.

Optionally, a data packet in this embodiment of this application may be an Ethernet packet, an IP packet, a tunnel packet, or the like. This is not limited in this application.

The following describes a test process based on a specific application scenario.

### Scenario 1

The device 1 sends a packet to the device 2, the device 2 forwards the packet to the device 3, and the device 3 forwards the packet to the device 4. In a process in which the device 1 sends the packet to the device 4, if a forwarding delay of the packet is large, a user may trigger the device 1 to test a transmission delay of the packet.

For example, the device 1 receives a user instruction, where the user instruction indicates to test a specified packet. For example, the specified packet may be indicated based on a packet address. For example, the user instruction may indicate to test a packet having a specified address (for example, the device 4), in other words, the device 1 initiates, in response to the user instruction, a test of a transmission delay of the packet having the specified address. For example, the specified packet may alternatively be indicated based on a packet type. For example, the user instruction may indicate to test a packet having a specified type. In other words, the device 1 initiates, in response to the user instruction, a test of a transmission delay of the packet having the specified type.

In a possible implementation, the user may further trigger the device to test a specified transmission path in addition to triggering the device to test the specified packet. For example, the user instruction may indicate the device 1 to test a forwarding path between the device 1 and the device 4. The forwarding path includes the device 1, the device 2, the device 3, and the device 4. In this scenario, the device 1 may test a transmission delay of the transmission path based on any packet transmitted on the transmission path. For example, the device 1 may also generate a test packet, for example, generate a Ping packet, to perform a test. This is not limited in this application. That is, in this embodiment of this application, the transmission delay on the transmission path may be tested by using a data packet, or may be tested based on the test packet. This is not limited in this application. If setting is performed based on the data packet, in addition to data sent by the device 1 to the device 4, the data packet further carries indication information, which indicates each device on the transmission path to test a delay of the device.

For example, in this embodiment of this application, a manner in which the user indicates the device 1 to test a packet sent to the device 4, to be specific, a packet having a specified address (the address of the device 4) is used as an example for description. For example, the device 1 generates a data packet in response to a received user instruction. The data packet includes but is not limited to: address information of the device 1, and address information, data information, and indication information that are of the device 4. The indication information indicates each device on the transmission path to test the delay of the device based on the data packet.

For example, the indication information may be carried in a specified field of the data packet. Optionally, the specified field may be included in a packet header of the data packet, or may be included in a data part of the data packet, or the like. This is not limited in this application. It should be noted that, each device on the transmission path needs to support parsing of the specified field. To be specific, when receiving the packet including the indication information, each device may correctly parse the specified field in the packet, to obtain the indication information.

For example, the device 1 sends the generated data packet to the device 2. It should be noted that, for a forwarding procedure between the device 1 to the device 4, for example, a process of querying a path forwarding table, refer to specific details in embodiments in the conventional technology. Details are not described in this application.

For example, the device 2 receives the data packet sent by the device 1. The device 2 parses the data packet, to obtain the indication information in the specified field in the data packet. The device 2 tests a transmission delay of the device 2 in response to the obtained indication information.

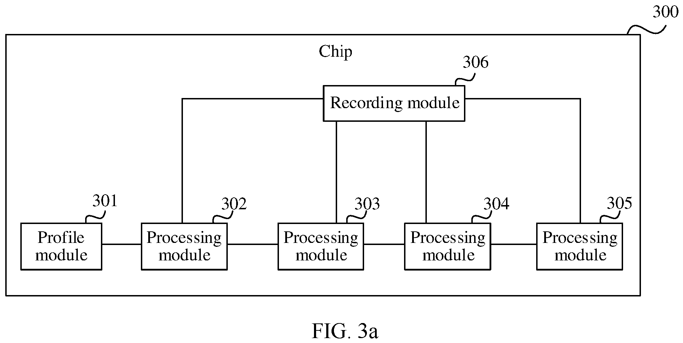

The following describes in detail a procedure in which the device 2 tests the transmission delay of the device. FIG. 3a is a schematic diagram of a structure of an example of a chip of a device 2. Refer to FIG. 3a. For example, the chip includes but is not limited to: a profile (configuration) module 301, a processing module 302, a processing module 303, a processing module 304, a processing module 305, and a recording module 306. For example, the profile module 301 is connected to the processing module 302, the processing module 302 is connected to the processing module 303, the processing module 303 is connected to the processing module 304, the processing module 304 is connected to the processing module 305, and the processing module 302 to the processing module 305 are separately connected to the recording module 306. Optionally, modules may be connected through a bus, or may be connected based on another line. This is not limited in this application. It should be noted that, names and a quantity of the modules in FIG. 3a are merely examples, and are not limited in this application.

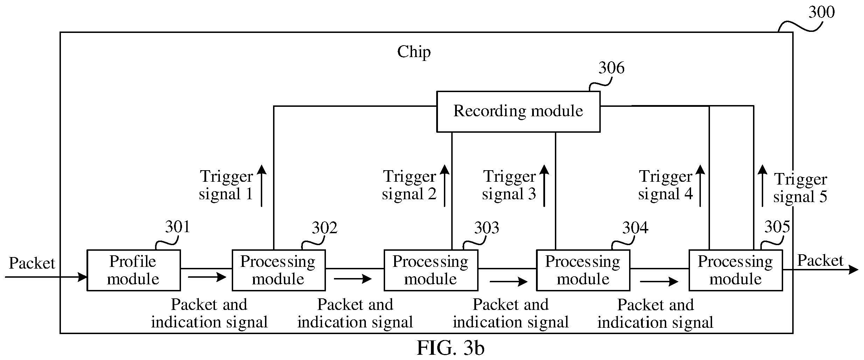

On the basis of the technology in FIG. 3 a, FIG. 3b is a schematic diagram of an example of a measurement procedure. Refer to FIG. 3b. For example, a chip 300 receives a data packet. In this embodiment of this application, an example in which a specified field is carried in a header of a packet is used for description.

For example, a profile module 301 may parse a header part in the data packet, to obtain indication information. Specifically, the profile module 301 may store a correspondence between a packet type and the specified field. As described above, this embodiment of this application is applicable to testing different types of packets. Optionally, specified fields of different packet types may be different. Correspondingly, the profile module 301 may identify a type of the packet based on the header of the packet. In addition, the specified field corresponding to the type of the packet may be obtained based on the correspondence between the packet type and the specified field. For example, the profile module 301 may read the specified field corresponding to the packet, to detect whether the packet carries specified information. In this embodiment of this application, an example in which the data packet read by the profile module 301 carries the indication information is used for description. It should be noted that, if the indication information is not read, it indicates that a transmission delay of the data packet does not need to be tested, and the data packet is processed based on a normal processing procedure.

For example, the profile module 301 detects that the data packet carries the indication information, and determines that the transmission delay of the data packet needs to be tested. For example, after detecting the indication information, the profile module 301 generates an indication signal. The indication signal indicates at least one module that is in the chip and that processes the data packet to test the transmission delay.

Still refer to FIG. 3b. For example, the profile module 301 outputs the indication signal to a processing module 302. The processing module 302 obtains the data packet from an interface of the chip, and receives the indication signal input by the profile module 301.

Optionally, when transmitting the data packet, processing modules may further transmit a vld (valid) signal, to indicate that the packet that is being transmitted is a valid packet. It should be noted that, transmission and generation of the signal may refer to embodiments in the conventional technology. Details are not described in this application.

For example, the processing module 302 receives the data packet and the indication signal. The processing module 302 may determine, in response to the received indication signal, that the transmission delay of the data packet needs to be tested. For example, the processing module 302 may generate a trigger signal 1, and output the trigger signal 1 to a recording module 306. In addition, the processing module 302 performs corresponding processing on the data packet.

It should be noted that, the processing modules in this embodiment of this application may process the packet in a same manner or different manners.

It should be further noted that, the chip in this embodiment of this application may include more modules. For example, the chip may include 10 processing modules, and processing modules that process the data packet are only a part of the processing modules, for example, the processing module 302 to a processing module 305 in FIG. 3b. Other processing modules may not perform any processing. Each module in the chip may be enabled based on a type of a received packet. In other words, for different types of packets, modules enabled in the chip may be the same or different. This is not limited in this application. In this embodiment of this application, when the transmission delay is measured, statistics collection is only performed on a delay of at least one processing module that processes the packet.

Still refer to FIG. 3. For example, the recording module 306 may be provided with a plurality of registers. Each of the registers corresponds to one processing module. It should be noted that, as described above, the chip may include more processing modules, for example, 10 modules. The register optionally includes 10 registers, and each of the registers corresponds to one processing module.

For example, the recording module receives the trigger signal 1 input by the processing module 302. Optionally, the recording module 306 may determine, based on a connection path between the recording module 306 and the processing module 302, that the trigger signal 1 is input by the processing module 302. Correspondingly, the recording module may find a register (for example, a register 1) corresponding to the processing module 302, and write a timestamp corresponding to current time into the register 1.

Optionally, a clock maintained by the recording module 306 may be the same as a clock in a real world. Optionally, the clock maintained by the recording module 306 may alternatively be a relative clock. For example, the clock maintained by the recording module 306 starts timing after the device 1 is started. This is not limited in this application. Optionally, the clock maintained by the recording module 306 may alternatively be updated periodically, to ensure accuracy of the recording clock.

For example, after processing the data packet, the processing module 302 outputs the data packet and the indication signal to a processing module 303. Optionally, the processing module 302 may further output a vld signal (whose concept may refer to the foregoing descriptions) to the processing module 303.

For example, the processing module 303 receives the data packet and the indication signal. The processing module 303 determines, in response to the received indication signal, that the transmission delay of the data packet needs to be measured. The processing module 303 generates a trigger signal 2, and outputs the trigger signal 2 to the recording module. In addition, the processing module 303 processes the data packet.

For example, the recording module 306 receives the trigger signal 2 input by the processing module 303, and may record a current timestamp 2 into a register 2 corresponding to the processing module 2. For other details, refer to the foregoing descriptions. Details are not described herein again.

For example, both a processing module 304 and the processing module 305 perform the foregoing steps. Correspondingly, the recording module 306 records corresponding timestamps (including a timestamp 3 and a timestamp 4) based on trigger signals input by the processing module 304 and the processing module 305. For specific details, refer to the related descriptions of the processing module 302. Details are not described herein again.

For example, after processing the data packet, the processing module 305 outputs a processed data packet to another chip or device (for example, a device 3).

Optionally, in an example, after processing the data packet, the processing module 305 may send a trigger signal 5 to the recording module 306. Correspondingly, the recording module 306 records a corresponding timestamp. It may be understood that a time difference between a timestamp corresponding to a trigger signal 4 sent by the processing module 305 and a timestamp corresponding to the trigger signal 5 sent by the processing module 305 is processing duration of the processing module 305. In another example, the processing duration of the processing module 305 may be set to a preset value. To be specific, in a subsequent statistics collection process, total processing duration of the chip may be compensated based on the preset value, that is, the preset value of the processing duration corresponding to the processing module 305 is added. In this embodiment of this application, an example in which the processing module 305 sends the trigger signal 5 after completing processing is used for description.

Optionally, a device 2 may include one or more chips. For example, if a plurality of chips in the device 2 process the data packet, each chip may perform processing steps the same as those of the chip 300 in this embodiment of this application.

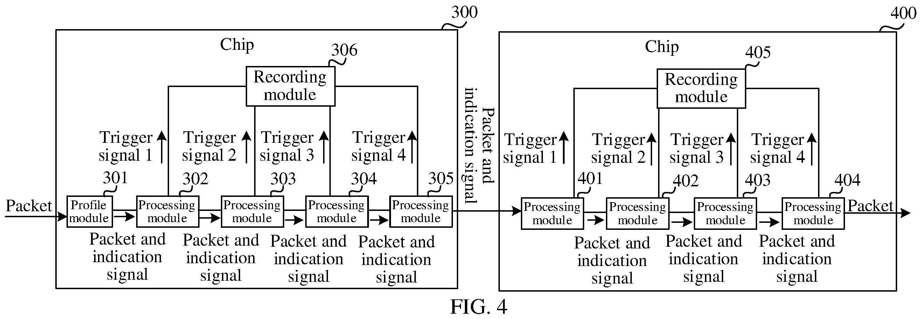

For example, FIG. 4 is a schematic diagram of a structure of an example of a device 2. Refer to FIG. 4. For example, the device 2 includes a chip 300 and a chip 400. For descriptions of the chip 300, refer to FIG. 3a and FIG. 3b. Details are not described herein again. The chip 400 includes but is not limited to: a processing module 401, a processing module 402, a processing module 403, a processing module 404, and a recording module 405. Optionally, the chip 2 may include a profile module, or may not include a profile module. This is not limited in this application.

For example, after the modules in the chip 300 perform processing according to procedure steps shown in FIG. 3b, a processing module 305 outputs a data packet and an indication signal to the processing module 401 in the chip 400 through an interface between the processing module 305 and the chip 400. The processing module 401 receives the data packet and the indication signal, generates a trigger signal, and outputs the trigger signal to the recording module 405. The recording module 405 may record a timestamp 6. For processing of the processing module 402 to the processing module 404, refer to the descriptions of the chip 300. Details are not described herein again. Correspondingly, the recording module 405 may record timestamps separately corresponding to the processing module 402 to the processing module 404.

For example, the chip 300 in FIG. 3b is still used as an example. For example, after receiving the trigger signal input by the processing module 305, the recording module 306 in the chip 300 optionally outputs a plurality of stored timestamps (including a timestamp 1 to a timestamp 5) to a processor. The processor may perform statistics collection on the plurality of obtained timestamps according to a requirement, to obtain a transmission delay (which may also be referred to as a processing delay or processing duration) of each processing module and/or total processing duration of the chip 300. The total processing duration is a transmission delay (which may also be referred to as a forwarding delay) when the chip 300 transmits (or forwards) a data packet. It should be noted that, the processor and the chip 300 described above are different components, to be specific, the processor is outside the chip 300 and is connected to the chip 300 through a bus or the like.

For example, a transmission delay of a processing module 302 is a difference between the timestamp 1 and a timestamp 2 (that is, the timestamp 2 minus the timestamp 1). Atransmission delay of a processing module 303 is a difference between a timestamp 3 and the timestamp 2 (that is, the timestamp 3 minus the timestamp 2). A transmission delay of a processing module 304 is a difference between a timestamp 4 and the timestamp 3 (that is, the timestamp 4 minus the timestamp 3). A transmission delay of the processing module 305 is a difference between the timestamp 5 and the timestamp 4 (that is, the timestamp 5 minus the timestamp 4).

For example, the total processing duration of the chip 300 may be obtained based on a sum of transmission delays of all processing modules. For example, the total processing duration of the chip 300 may alternatively be obtained based on a difference between the timestamp 1 and the timestamp 5 (that is, the timestamp 5 minus the timestamp 1).

The processor may feed back an obtained measurement result to an upper-layer application. The measurement result includes the transmission delay of each processing module and/or a transmission delay of the chip (that is, the device 2). The upper-layer application may transmit the measurement result to a device 1.

As described above, after processing the data packet, the device 2 sends the data packet to a device 3. The device 3 and a device 4 may sequentially measure a transmission delay based on the foregoing measurement manners, and feed back a measurement result to the device 1.

For example, the device 1 optionally displays, in a display window, a measurement result corresponding to each device. Optionally, the device 1 may further perform statistics collection on a total transmission delay. The total transmission delay is a sum of transmission delays of all devices.

For example, if the total transmission delay exceeds a specified threshold, the device 1 may position a faulty device based on a plurality of obtained measurement results. For example, the device 1 may be set with a range of processing duration (that is, a transmission delay) corresponding to each device or corresponding to each processing module in the device. If a transmission delay of a specific device is greater than a set threshold, it may be determined that the device is a faulty device (or a faulty device). For example, the device 1 may further perform comparison based on a delay corresponding to each processing module in the device and a preset range corresponding to each module, to further determine a faulty module.

It should be noted that, in an example, if clocks of the device 1 to the device 4 are synchronized, the device 1 may obtain a transmission delay between the devices based on a timestamp corresponding to each device. For example, a difference between a last timestamp of the device 2 and a first timestamp of the device 3 is duration (that is, a transmission delay) occupied in a process in which the device 2 transmits a packet to the device 3. In another example, if clocks of the device 1 to the device 4 are not synchronized, optionally, the device 1 may obtain total duration in which the device 1 transmits a packet to the device 4, and the total duration may be obtained by using a Ping packet. The total duration includes the processing duration of each device and a transmission delay during packet transmission between devices. For example, the device 1 may obtain the total duration and a sum of processing duration of all devices obtained through measurement, to obtain a transmission delay of actual packet transmission. For example, in a case in which the processing duration of each device obtained through measurement is less than a set threshold, that is, each device is normal, if the transmission delay of the actual packet transmission is greater than the set threshold, it may be determined that a factor affecting the packet transmission is a transmission cable between the devices. For positioning of a fault of a cable, refer to the conventional technology. This is not limited in this application.

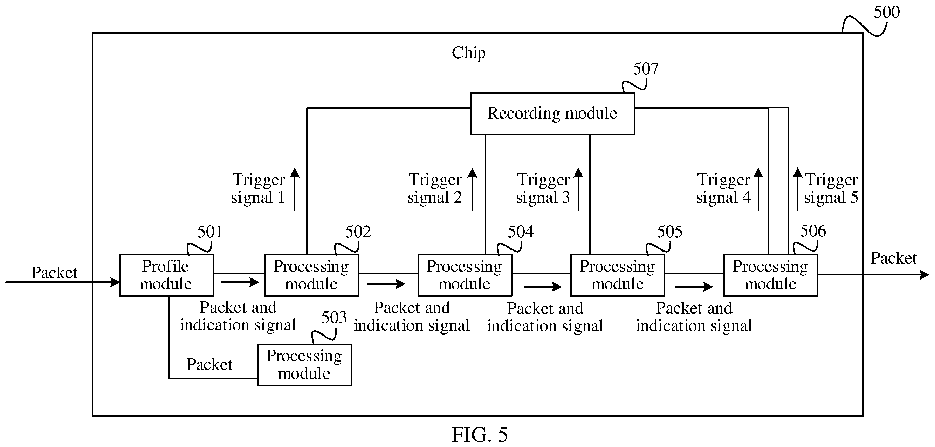

In a possible implementation, FIG. 5 is a schematic diagram of a structure of an example of a chip 500. The chip 500 includes but is not limited to: a profile module 501, a processing module 502, a processing module 503, a processing module 504, a processing module 505, a processing module 506, and a recording module 507. For example, a manner of processing a data packet by the processing module 503 is saving the data packet. That is, the processing by the processing module 503 does not affect the transmission delay of the data packet. Optionally, the profile module 501 may send a data packet and an indication signal to the processing module 502, to indicate the processing module 502 to measure a transmission delay of the data packet. The profile module may send a data packet to the processing module 503, but does not send an indication signal. The processing module 503 performs corresponding processing on the data packet. In another example, the profile module 501 may send the data packet and the indication signal to the processing module 502 and the processing module 503 separately. After receiving the data packet and the indication signal, the processing module 503 does not generate a trigger signal, and only performs corresponding processing on the data packet. In still another example, the profile module 501 may send the data packet and the indication signal to the processing module 502 and the processing module 503. In this example, the processing module 502 and the processing module 503 may be considered as parallel processing modules. The processing module 502 and the processing module 503 may generate a trigger signal, and output the trigger signal to the recording module 507. Correspondingly, when statistics collection is performed on processing duration of a processing module, a processor may determine, based on timestamps of the processing module 502 and the processing module 503 respectively, that the processing module 502 and the processing module 503 are the parallel processing modules. For the parallel processing modules, the processor may use processing duration corresponding to a module with longest processing duration as a transmission delay of the parallel processing modules.

In another possible implementation, a key module may be preset in advance, where the key module is one or more processing modules of a plurality of processing modules that process a packet. In other words, in this embodiment of this application, statistics collection is only performed on a processing delay of at least one of the plurality of processing modules.

In a possible implementation, a device 1 may alternatively periodically initiate the foregoing test procedure, to implement automatic detection of a transmission delay.

It should be noted that, in the foregoing embodiments, the transmission delay of the chip is optionally a sum of delays of all processing modules. For example, in an ideal state, a processing delay of a processing module is equal to a recorded timestamp difference. However, because the processing module outputs a trigger signal to the recording module, there may also be a specific delay during transmission of the trigger signal and response of the recording module. Optionally, the delay may be set to a default value, and the set default value may be subtracted from the transmission delay of each processing module during statistics collection. Optionally, because distances between the processing modules and the recording module are different, transmission delays of trigger signals of the processing modules are also different. Correspondingly, the processor may pre-record a transmission delay of a trigger signal corresponding to each processing module. The transmission delays of the trigger signals respectively corresponding to the processing modules may be the same or may be different. This is not limited in this application. When statistics collection is performed on the transmission delay of each processing module, the transmission delay of the trigger signal corresponding to each module may be subtracted. Optionally, because the transmission delay of the trigger signal is small, the transmission delay may alternatively be ignored.

It should be further noted that, processing of the profile module also takes specific duration. Optionally, the processing duration of the profile module may also be a set default value. When statistics collection is performed on the transmission delay of the chip, the set default value of the profile module may be subtracted. Optionally, the processing duration of the profile module is small and may be ignored.

It should be further noted that, time of a plurality of devices may be synchronized or not synchronized. In other words, even if the time of the plurality of devices is not synchronized, statistics collection on a transmission delay of a single device is not affected.

### Scenario 2

A device 1 sends a packet to a device 2, the device 2 forwards the packet to a device 3, and the device 3 forwards the packet to a device 4. In a process in which the device 1 sends the packet to the device 4, if a forwarding delay of the packet on a transmission path is large, a user may trigger the device 1 to the device 4 to test a transmission delay of the packet. For example, as described above, the packet includes but is not limited to address information and data information, where the address information includes source address information and destination address information.

For example, the user may separately configure at least one of the device 1 to the device 4 by delivering an instruction through the device 1, or in a manual configuration manner. The device 1 to the device 4 update a matching manner of a profile module in response to a received user instruction, so that the profile module can identify a data packet including specified characteristic information. It may be understood that, in this identification manner, any device on the transmission path can be triggered to perform a delay test. Optionally, the identification manner may be further configured to be periodic, for example, a delay test is performed for a packet including specified characteristic information every periodicity (for example, 10 minutes).

Optionally, the specified characteristic information includes but is not limited to the destination address information and the source address information in the packet. The destination address information and the source address information may be destination MAC (Media Access Control Address, media access control address) address information and source MAC address information, or may be destination IP (Internet Protocol Address, internet protocol address) address information and source IP address information. This is not limited in this application.

For example, after receiving the packet, the profile module may identify the address information of the packet. For example, if it is identified that the packet carries specified address information, another processing module in a chip is triggered to perform a delay test on the packet. For other details that are not described, refer to the descriptions in the scenario 1. Details are not described herein again.

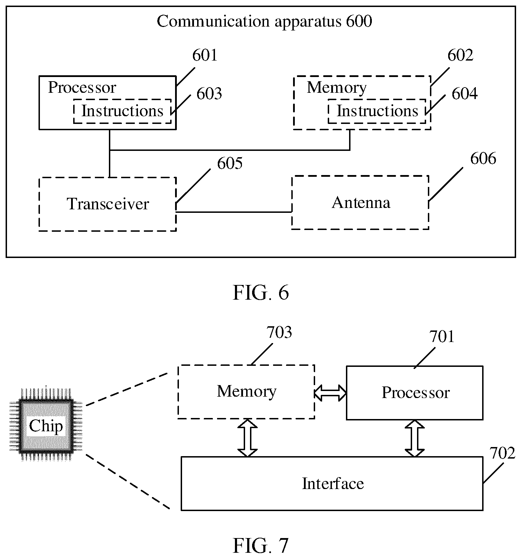

The following describes an apparatus provided in an embodiment of this application. As shown in FIG. 6:

FIG. 6 is a schematic diagram of a structure of a communication apparatus according to an embodiment of this application. As shown in FIG. 6, the communication apparatus 600 may include: a processor 601 and a transceiver 605, and optionally, further includes a memory 602.

The transceiver 605 may be referred to as a transceiver unit, a transceiver machine, a transceiver circuit, or the like, and is configured to implement a transceiver function. The transceiver 605 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 602 may store a computer program or software code or an instruction 604, and the computer program or the software code or the instruction 604 may also be referred to as firmware. The processor 601 may control a MAC layer and a PHY layer by running a computer program or software code or an instruction 603 in the processor 601, or by invoking the computer program or the software code or the instruction 604 stored in the memory 602, to implement an OM negotiation method provided in the following embodiments of this application. The processor 601 may be a central processing unit (central processing unit, CPU), and the memory 602 may be, for example, a read-only memory (read-only memory, ROM) or a random access memory (random access memory, RAM).

The processor 601 and the transceiver 605 described in this application may be implemented in an integrated circuit (integrated circuit, IC), an analog IC, a radio frequency integrated circuit RFIC, a mixed-signal IC, an application-specific integrated circuit (application specific integrated circuit, ASIC), a printed circuit board (printed circuit board, PCB), an electronic device, or the like.

The communication apparatus 600 may further include an antenna 606. Modules included in the communication apparatus 600 are merely examples for description. This is not limited in this application.

As described above, the communication apparatus described in the foregoing embodiments may be an access point or a station. However, a scope of the communication apparatus described in this application is not limited thereto, and a structure of the communication apparatus may not be limited by FIG. 29. The communication apparatus may be an independent device or may be a part of a large device. For example, an implementation form of the communication apparatus may be:
(1) an independent integrated circuit IC, a chip, a chip system, or a subsystem of the chip system; (2) a set of one or more ICs, where, optionally, the IC set may also include a storage component configured to store data and instructions; (3) a module that can be embedded in another device; or (4) others and so on.

For a case in which the implementation form of the communication apparatus is a chip or a chip system, refer to a schematic diagram of a structure of a chip shown in FIG. 7. A chip shown in FIG. 7 includes a processor 701 and an interface 702. There may be one or more processors 701, and there may be a plurality of interfaces 702. Optionally, the chip or the chip system may include a memory 703.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by an electronic device, to control the electronic device to implement the foregoing method embodiments.

Based on a same technical concept, an embodiment of this application further provides a computer program. When the computer program is executed by an electronic device, the computer program is used for implementing the foregoing method embodiments.

A part or all of the program may be stored in a storage medium encapsulated with a processor, or a part or all of the program may be stored in a memory that is not encapsulated with a processor.

Based on a same technical concept, an embodiment of this application further provides a processor. The processor is configured to implement the foregoing method embodiments. The processor may be a chip.

Based on a same technical concept, an embodiment of this application further provides a communication system. The communication system includes nodes and a control device in the foregoing method embodiments.

The methods or algorithm steps described with reference to the content disclosed in embodiments of this application may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may also be a component of the processor. The processor and the storage medium may be located in an ASIC. In addition, the ASIC may be located in a network device. Certainly, the processor and the storage medium may exist in the network device as discrete components.

A person skilled in the art should be aware that in the foregoing one or more examples, functions described in embodiments of this application may be implemented by hardware, software, firmware, or any combination thereof. When the software is used for implementation, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A measurement method, comprising:
receiving a first measurement packet;
obtaining processing duration of processing the first measurement packet by each processing module of at least one processing module; and
obtaining, based on the processing duration of processing the first measurement packet by each processing module, total processing duration of processing the first measurement packet by the at least one processing module.

2. The method according to claim 1, wherein the first measurement packet comprises indication information, and the indication information indicates that the processing duration of the first measurement packet needs to be measured.

3. The method according to claim 2, wherein the receiving a first measurement packet comprises:
generating an indication signal in response to the received first measurement packet, wherein the indication signal indicates the at least one processing module to send a trigger signal when starting to process the first measurement packet.

4. The method according to claim 1, wherein the receiving a first measurement packet comprises:
identifying, in response to the received first measurement packet, whether the first measurement packet comprises specified characteristic information; and
generating an indication signal when it is identified that the first measurement packet comprises the specified characteristic information, wherein the indication signal indicates the at least one processing module to send a trigger signal when starting to process the first measurement packet.

5. The method according to claim 3 or 4, wherein the obtaining processing duration of processing the first measurement packet by each processing module of at least one processing module comprises:
recording, in response to the received trigger signal sent by each processing module, start time at which each processing module processes the first measurement packet.

6. The method according to claim 5, wherein the processing modules are connected in series, and the processing duration of each processing module is a difference between start time of two processing modules connected in series.

7. The method according to claim 6, wherein the obtaining processing duration of processing the first measurement packet by each processing module of at least one processing module comprises:
transmitting, after a previous processing module in the two processing modules connected in series completes processing the first measurement packet, a processed first measurement packet and the indication signal to a next processing module.

8. The method according to claim 4, wherein the specified characteristic information is at least one of the following:
destination MAC address information, source MAC address information, destination IP address information, source IP address information, and label information.

9. A network device, comprising:
a receiving module, configured to receive a first measurement packet; and
an obtaining module, configured to obtain processing duration of processing the first measurement packet by each processing module of at least one processing module, wherein
the obtaining module is further configured to obtain, based on the processing duration of processing the first measurement packet by each processing module, total processing duration of processing the first measurement packet by the at least one processing module.

10. The apparatus according to claim 9, wherein the first measurement packet comprises indication information, and the indication information indicates that the processing duration of the first measurement packet needs to be measured.

11. The apparatus according to claim 10, wherein the receiving module is configured to:
generate an indication signal in response to the received first measurement packet, wherein the indication signal indicates the at least one processing module to send a trigger signal when starting to process the first measurement packet.

12. The apparatus according to claim 10, wherein the receiving module is configured to:
identify, in response to the received first measurement packet, whether the first measurement packet comprises specified characteristic information; and
generate an indication signal when it is identified that the first measurement packet comprises the specified characteristic information, wherein the indication signal indicates the at least one processing module to send a trigger signal when starting to process the first measurement packet.

13. The apparatus according to claim 11 or 12, wherein the obtaining module is configured to:
record, in response to the received trigger signal sent by each processing module, start time at which each processing module processes the first measurement packet.

14. The apparatus according to claim 12, wherein the processing modules are connected in series, and the processing duration of each processing module is a difference between start time of two processing modules connected in series.

15. The apparatus according to claim 13, wherein after a previous processing module in the two processing modules connected in series completes processing the first measurement packet, a processed first measurement packet and the indication signal are transmitted to a next processing module.

16. The apparatus according to claim 9, wherein the specified characteristic information is at least one of the following:
destination MAC address information, source MAC address information, destination IP address information, source IP address information, and label information.

17. An apparatus, comprising at least one processor and an interface, wherein the processor receives or sends data through the interface; and the at least one processor is configured to invoke a software program stored in a memory, to perform the method according to any one of claims 1 to 7.

18. A computer-readable storage medium, wherein the computer-readable storage medium stores a computer program; and when the computer program is run on a computer or a processor, the computer or the processor is enabled to perform the method according to any one of claims 1 to 7.

19. A computer program product, wherein the computer program product comprises a software program; and when the software program is executed by a computer or a processor, the method according to any one of claims 1 to 7 is performed.

20. A network device, configured to:
send a first packet to a destination device through a data link, wherein the data link comprises at least one intermediate device;
receive first processing delay information sent by each intermediate device of the at least one intermediate device, wherein the first processing delay information indicates processing duration of processing the first packet by at least one processing module of the intermediate device;
receive second processing delay information sent by the destination device, wherein the second processing delay information indicates processing duration of processing the first packet by at least one processing module of the destination device; and
determine, based on the first processing delay information and the second processing delay information, whether a fault processing module exists in the at least one intermediate device and the destination device.
